(19) Europäisches Patentamt / European Patent Office / Office européen des brevets

(11) **EP 4 064 444 A1**

(12) **EUROPEAN PATENT APPLICATION**

(43) Date of publication:
28.09.2022 Bulletin 2022/39

(21) Application number: 22162586.6

(22) Date of filing: 16.03.2022

(51) International Patent Classification (IPC):
*H01M 50/446* (2021.01)     *H01M 50/449* (2021.01)
*H01M 50/451* (2021.01)     *H01M 50/457* (2021.01)

(52) Cooperative Patent Classification (CPC):
H01M 50/449; H01M 50/446; H01M 50/451;
H01M 50/457

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 23.03.2021 KR 20210037509

(71) Applicants:
• **SK Innovation Co., Ltd.**
**Seoul 03188 (KR)**

• **SK ie technology Co., Ltd.**
**Jongno-gu**
**Seoul**
**03188 (KR)**

(72) Inventor: **JI, Sang Yoon**
**34124 Daejeon (KR)**

(74) Representative: **Stolmár & Partner**
**Patentanwälte PartG mbB**
**Blumenstraße 17**
**80331 München (DE)**

(54) **COMPOSITE SEPARATOR AND ELECTROCHEMICAL DEVICE USING THE SAME**

(57)     The present disclosure relates to a novel organic/inorganic composite porous separator that has excellent thermal stability, improved wettability with an electrolyte solution, an excellent adhesive property between a porous substrate and a porous active layer, excellent electrochemical stability, excellent lithium ion conductivity, and a low resistance increase rate in comparison to a polyolefin-based separator according to the related art, and an electrochemical device capable of implementing both securing of safety and performance improvement by including the separator.

EP 4 064 444 A1

**Description**

**TECHNICAL FIELD**

The following disclosure relates to a separator and an electrochemical device using the same. More particularly, the following disclosure relates to a novel organic/inorganic composite porous separator that has excellent thermal stability, improved wettability with an electrolyte solution, an excellent adhesive property between a porous substrate and a porous active layer, excellent electrochemical stability, excellent lithium ion conductivity, and a low resistance increase rate in comparison to a polyolefin-based separator according to the related art, and an electrochemical device capable of implementing both securing of safety and performance improvement by including the separator.

**BACKGROUND**

Recently, in accordance with a high capacity and a large size of a secondary battery for application in an electric vehicle or the like, it is significantly important to secure safety of the battery.
In order to prevent ignition of the battery caused by a forced internal short circuit due to an external impact for securing the safety, a ceramic layer including inorganic particles or inorganic particles and organic particles is introduced onto a polyolefin porous sheet or the like, such that the safety of the battery is secured. Such a battery having safety is being commercialized.
However, when the ceramic layer is introduced onto the polyolefin porous sheet or the like, a polymer binder is used for adhesion of the ceramic layer to the porous sheet or connection and fixation between the inorganic particles. However, in a case where the organic binder is used as described above, a chemical reaction occurs between an electrolyte solution of the battery and the organic binder component, the organic binder is dissolved and diluted in the electrolyte solution, or the organic binder is swollen due to the electrolyte solution. When such a phenomenon occurs, there are various problems that cause deterioration of the performance of the battery, such as deterioration of the performance of the electrolyte solution due to clogging of pores of the porous sheet, generation of gas due to the chemical reaction, or elution of the organic binder in the electrolyte solution, and an increase in volume of the battery due to swelling.

**SUMMARY**

As a result of conducting intensive studies to solve the above problems, a composite separator was produced, the composite separator being obtained by preparing a slurry containing particles including inorganic particles as a main component and a one-dimensional inorganic material in the form of nanowires, and forming a multi-dimensional heterogeneous material-containing composite layer (also, may be referred to as a first composite layer) by coating the slurry to one or both surfaces of a porous substrate and performing drying without using an organic binder having insufficient chemical stability. Therefore, in the composite separator, adhesive strength between the porous substrate and the composite layer is sufficient, heat resistance is further improved, wettability with the electrolyte solution is improved by the one-dimensional inorganic material, and thus, it was found that a composite separator capable of reducing resistance of a battery cell may be provided.
An embodiment of the present disclosure is directed to providing a novel composite separator that does not cause elution of an organic binder, swelling due to an electrolyte solution, clogging of pores, generation of gas, and deterioration of performance of the electrolyte solution, and prevents an increase in volume of a battery due to swelling.
Another embodiment of the present disclosure is directed to providing a composite separator having excellent adhesive strength to a porous substrate without using an organic binder.
Still another embodiment of the present disclosure is directed to providing a novel composite separator capable of reducing resistance of a battery cell by improving wettability due to a one-dimensional inorganic material at an interface between a porous substrate and an composite layer by forming a multi-dimensional heterogeneous material-containing composite layer obtained by coating the one-dimensional inorganic material together with particles including excess inorganic particles to the porous substrate.
Still another embodiment of the present disclosure is directed to providing a novel composite separator that has more excellent heat resistance, prevents a change in performance of a battery over time, and is more permanently and chemically stable in comparison to a separator including a ceramic layer obtained using an organic binder and particles including inorganic particles according to the related art.
Still another embodiment of the present disclosure is directed to providing a separator that has improved wettability with an electrolyte solution, has excellent electrochemical stability due to low resistance, and has excellent electrical characteristics because a resistance value of the produced separator is lower than that of a separator including a porous substrate alone, in particular, even though a multi-dimensional heterogeneous material-containing composite layer is formed using particles including inorganic particles and a one-dimensional inorganic material without essentially using an organic binder in a porous substrate, and a lithium secondary battery using the same.

Still another embodiment of the present disclosure is directed to providing a novel separator that may significantly improve electrical characteristics such as a capacity retention rate of a secondary battery because lithium ions smoothly migrate in the produced separator by completely or sufficiently preventing clogging of pores of a porous substrate by an organic binder or elution of the organic binder into an electrolyte solution.

Still another embodiment of the present disclosure is directed to providing a novel separator that has excellent lithium ion conductivity, an excellent rate of electrolyte solution impregnation, and excellent thermal stability in comparison to a separator according to the related art.

Still another embodiment of the present disclosure is directed to providing a separator that implements more excellent dimensional stability of a battery against a high capacity and a large size of the battery, and has the effect of further improving the safety of the battery with almost no deviation in thickness even after long-term use of a battery in which hundreds of layers are stacked.

Still another embodiment of the present disclosure is directed to providing an electrochemical device having excellent performance, and particularly, to a lithium secondary battery.

In one general aspect, a composite separator includes:

> a porous substrate (a); and
> a multi-dimensional heterogeneous material-containing composite layer (b) that is stacked on one or both surfaces of the porous substrate and contains inorganic particles or particles including inorganic particles (A) and a one-dimensional inorganic material (B).

In an exemplary embodiment, the composite separator may further include one layer selected from:

> a porous substrate (a);
> a multi-dimensional heterogeneous material-containing composite layer (b) that is formed on one or both surfaces of the porous substrate and contains inorganic particles or particles including inorganic particles (A) and a one-dimensional inorganic material (B); and
> an inorganic particle layer (c) containing inorganic particles and an organic binder, or a second multi-dimensional heterogeneous material-containing composite layer formed using particles including inorganic particles and a one-dimensional inorganic material, the layer being formed on an upper portion of the multi-dimensional heterogeneous material-containing composite layer.

In the present specification, the second multi-dimensional heterogeneous material-containing composite layer contains the one-dimensional inorganic material with a content different from a content of the one-dimensional inorganic material in the multi-dimensional heterogeneous material-containing composite layer formed on the porous substrate (may be referred to as a first composite layer). For example, the contents of the one-dimensional inorganic materials in the form of inorganic nanowires or inorganic nanofibers in the two layers are different from each other.

The one-dimensional inorganic materials in the first and second multi-dimensional heterogeneous material-containing composite layers may impart an excellent adhesive force by firmly bonding the particles, the particles and the porous substrate, and the porous substrate and the one-dimensional inorganic material.

In an exemplary embodiment, in the first composite layer and the second composite layer, the one-dimensional inorganic material in the form of inorganic nanowires or inorganic nanofibers may be contained in the first composite layer in an amount larger or smaller than that in the second composite layer, but the contents of the one-dimensional inorganic materials in the first composite layer and the second composite layer are different from each other.

In an exemplary embodiment, the inorganic particles or the particles including inorganic particles (A) may be inorganic particles alone or mixed particles of inorganic particles and organic particles. In addition, it is more preferable to contain inorganic particles alone or an excessive amount of inorganic particles relative to organic particles in terms of safety of a battery.

That is, the multi-dimensional heterogeneous material-containing composite layer may contain inorganic particles and a one-dimensional inorganic material, or may contain inorganic particles, organic particles, and a one-dimensional inorganic material.

The inorganic particles may be formed of one or two or more selected from a metal oxide, a metal nitride, a metal carbide, a metal carbonate, a metal hydrate, and a metal carbonitride. Specifically, the inorganic particles are not particularly limited as long as they are commonly used in this field, and may be formed of one or two or more selected from boehmite, $Al_2O_3$, $TiO_2$, $CeO_2$, MgO, NiO, $Y_2O_3$, CaO, $SrTiO_3$, $SnO_2$, ZnO, and $ZrO_2$, but are not limited thereto.

The shapes of the particles are not particularly limited, and examples thereof include a spherical shape, a square shape, an elliptical shape, a random shape, and a mixture thereof.

A size of the particle is not particularly limited as long as an object of an exemplary embodiment may be achieved, and an average particle diameter of the particles may be 0.001 to 20 $\mu$m.

In the first composite layer and the second composite layer, a content of the inorganic particles or the particles including inorganic particles may be, but is not limited to, 50 to 99.9 wt% with respect to a total weight of the layers, and is not particularly limited as long as the particles are adjacent and connected to each other. Therefore, a content of the one-dimensional inorganic material in each layer may be 0.1 to 50 wt% or 0.1 to 30 wt% with respect to the total weight of the layers, but is not limited thereto.

The one-dimensional inorganic material is not particularly limited as long as it is in the form of inorganic nanowires or inorganic nanofibers .

The one-dimensional inorganic material is not particularly limited. For example, the wires may have a diameter of 1 to 100 nm, a length of 0.01 to 100 $\mu$m, and a length/diameter (L/D) of 100 to 20,000 without limitation, and independently may have a specific surface area of 50 to 4,000 m$^2$/g, but are not limited thereto.

The one-dimensional inorganic material is not particularly limited. For example, the one-dimensional inorganic material may be one or two or more selected from a metal, carbon, a metal oxide, a metal nitride, a metal carbide, a metal carbonate, a metal hydrate, and a metal carbonitride, and more specifically, may be one or two or more selected from boehmite, $Ga_2O_3$, $SiC$, $SiC_2$, quartz, $NiSi$, $Ag$, $Au$, $Cu$, $Ag$-$Ni$, $ZnS$, $Al_2O_3$, $TiO_2$, $CeO_2$, $MgO$, $NiO$, $Y_2O_3$, $CaO$, $SrTiO_3$, $SnO_2$, $ZnO$, and $ZrO_2$, but is not limited thereto.

The first composite layer or the second composite layer may fix the particles of the one-dimensional inorganic material in the form of inorganic nanowires or inorganic nanofibers, and may fix the porous substrate disposed at a lower portion and the composite layer, the first composite layer and the second composite layer, or the inorganic particle layer and the first composite layer, which may impart excellent adhesive strength.

In addition, the first composite layer and the second composite layer do not contain an organic binder in principle, but may further contain a polymer binder, if necessary.

In addition, the organic binder may be used without limitation as long as it is an organic binder commonly used for a separator.

In a case where the organic binder is used, the content of the one-dimensional inorganic material may be 30 to 99.99 wt%, 70 to 99.99 wt%, 50 to 99.99 wt%, or 90 to 99.9 wt%, with respect to a total content of the organic binder and the one-dimensional inorganic material, but is not limited thereto.

The porous substrate is formed of an organic polymer and is not particularly limited as long as it has a porous property. Examples of the porous substrate include a polyolefin porous sheet or film, and may also include a woven fabric and a non-woven fabric. As a specific example, the porous substrate may be a porous film formed of one or more selected from the group consisting of high-density polyethylene, low-density polyethylene, linear low-density polyethylene, ultra-high molecular weight polyethylene, polypropylene, and copolymers thereof, and is not limited thereto as long as it is a porous polymer film.

A porosity of the porous substrate is not particularly limited as long as it is, for example, 5 to 95 vol%.

A thickness of the porous substrate may be 3 to 100 $\mu$m or 5 to 50 $\mu$m, but is not limited thereto.

A thickness of the inorganic particle layer, the first composite layer, or the second composite layer may be 0.1 to 50 $\mu$m, 0.5 to 10 $\mu$m, or 1 to 5 $\mu$m, but is not limited thereto.

In an exemplary embodiment, a thickness of the composite separator is not particularly limited, and may be, for example, 5 to 200 $\mu$m, and specifically 5 to 100 $\mu$m, but is not limited thereto.

In an exemplary embodiment, a pore size of the composite separator is not particularly limited, and may be, for example, 0.001 to 10 $\mu$m, and a porosity of the composite separator may be 5 to 95%.

In another general aspect, an electrochemical device includes a cathode, an anode, a separator, and an electrolyte solution, wherein the separator is the composite separator. Specifically, a lithium secondary battery may be provided. In addition, the composite separator may be used as a separator for various batteries, and is not limited thereto.

As set forth above, according to an exemplary embodiment, the composite separator may have sufficient adhesive strength between the inorganic particles, the inorganic particles and the porous substrate, the porous substrate and the first composite layer, the inorganic particle layer and the first composite layer; and the first composite layer and the second composite layer by the one-dimensional inorganic material, may have further improved heat resistance, and may reduce the resistance of the battery cell due to improved wettability with the electrolyte solution by the one-dimensional inorganic material.

Further, it is possible to provide a novel composite separator that does not cause elution of an organic binder, swelling due to an electrolyte solution, clogging of pores, generation of gas, and deterioration of performance of the electrolyte solution, and prevents an increase in volume of a battery due to swelling.

According to an exemplary embodiment, it is possible to provide a novel separator that may improve wettability by the one-dimensional inorganic material at the interface between the porous substrate and the composite layer or between the inorganic particle layer and the composite layer and may thus reduce the resistance of the battery cell by forming the multi-dimensional heterogeneous material-containing composite layer obtained by coating the one-dimensional inorganic material together with the particles including an excessive amount of inorganic particles onto the porous substrate or the inorganic particle layer.

Further, it is possible to provide a novel separator that has more excellent heat resistance, prevents a change in performance of a battery over time, and is more permanently and chemically stable in comparison to a separator including a ceramic layer obtained using an organic binder and particles including inorganic particles according to the related art.

Further, according to an exemplary embodiment, it is possible to provide a composite separator that has improved wettability with an electrolyte solution, has excellent electrochemical stability due to low resistance, and has excellent electrical characteristics because a resistance value of the produced separator is lower than that of a separator including a porous substrate alone, in particular, even though the multi-dimensional heterogeneous material-containing composite layer containing the hydrophilic one-dimensional inorganic material is formed on the upper portion of the porous substrate or the upper portion of the inorganic particle layer, and a lithium secondary battery using the same.

Further, it is possible to provide a novel separator that may significantly improve electrical characteristics such as a capacity retention rate of a secondary battery because lithium ions smoothly migrate in the produced separator by completely or sufficiently preventing clogging of pores of a porous substrate by an organic binder or elution of the organic binder into an electrolyte solution.

Further, it is possible to provide a novel separator that has excellent lithium ion conductivity, an excellent rate of electrolyte solution impregnation, and excellent thermal stability in comparison to a separator according to the related art.

Further, it is possible to provide a separator that implements more excellent dimensional stability of a battery against a high capacity and a large size of the battery, and has the effect of further improving the safety of the battery with almost no deviation in thickness even after long-term use of a battery in which hundreds of layers are stacked.

Further, it is possible to provide an electrochemical device having excellent performance, and particularly, to a lithium secondary battery.

In addition, the coating layer formed of only an inorganic material is formed on the one or both surfaces of the porous substrate, and the adhesive force is sufficiently secured by the one-dimensional inorganic material in the form of inorganic nanowires or inorganic nanofibers. Although it is not clear, it is considered that the effect of sufficiently increasing the adhesive force with a force such as van der Waals bonds due to an increase in surface area is achieved. In addition, this is considered to be because the one-dimensional inorganic material is anchored in and bonded to the pores of the porous substrate or the inorganic particle layer, and firm fixation is achieved by entanglement and van der Waals bonds between the one-dimensional inorganic material and the inorganic particles.

**BRIEF DESCRIPTION OF THE DRAWINGS**

FIG. 1 is a schematic view of a cross section of a separator according to an exemplary embodiment.
FIG. 2 is a photograph of a surface of a composite separator of Example 1.
FIG. 3 is a photograph of a single layer of the composite separator of Example 1.

**DETAILED DESCRIPTION OF EMBODIMENTS**

Hereinafter, the present disclosure will be described in detail. However, each of the following exemplary embodiments is only a reference example for describing the present disclosure in detail, and the present disclosure is not limited thereto and may be implemented in various forms.

In addition, unless otherwise defined, all the technical terms and scientific terms used herein have the same meanings as commonly understood by those skilled in the art to which the present disclosure pertains. The terms used in the description of the present disclosure are merely used to effectively describe a specific exemplary embodiment, but are not intended to limit the present disclosure.

According to an exemplary embodiment, a composite separator includes:

a porous substrate (a); and
a multi-dimensional heterogeneous material-containing composite layer (b) that is stacked on one or both surfaces of the porous substrate using particles including inorganic particles and a one-dimensional inorganic material.

In an exemplary embodiment, the composite separator further includes one layer selected from:

a porous substrate (a);
a multi-dimensional heterogeneous material-containing composite layer (b) that is stacked on one or both surfaces of the porous substrate using particles including inorganic particles and a one-dimensional inorganic material; and an inorganic particle layer (c) containing inorganic particles and an organic binder, or a second multi-dimensional heterogeneous material-containing composite layer formed using particles including inorganic particles and a one-dimensional inorganic material, the layer being formed on an upper portion of the multi-dimensional heterogeneous material-containing composite layer.

In an exemplary embodiment, the second multi-dimensional heterogeneous material-containing composite layer contains the one-dimensional inorganic material with a content different from a content of the one-dimensional inorganic material in the multi-dimensional heterogeneous material-containing composite layer formed on the porous substrate (may be referred to as a first composite layer). For example, the contents of the one-dimensional inorganic materials in the form of inorganic nanowires or inorganic nanofibers in the two layers are different from each other.

The one-dimensional inorganic materials in the first and second multi-dimensional heterogeneous material-containing composite layers may impart an excellent adhesive force by firmly bonding the particles, the particles and the porous substrate, and the porous substrate and the one-dimensional inorganic material.

In an exemplary embodiment, in the first composite layer and the second composite layer, the one-dimensional inorganic material in the form of inorganic nanowires may be contained in the first composite layer in an amount larger or smaller than that in the second composite layer, but the contents of the one-dimensional inorganic materials in the two layers are different from each other.

In an exemplary embodiment, the particles may be inorganic particles, organic particles, or a mixture thereof, and for example, inorganic particles alone or an excessive amount of inorganic particles relative to organic particles may be contained in terms of safety of a battery.

In addition, the first composite layer and the second composite layer do not contain an organic binder in principle, but may further contain a polymer organic binder, if necessary.

In addition, the organic binder may be used without limitation as long as it is an organic binder commonly used for a separator. In a case where the organic binder is used, the content of the one-dimensional inorganic material may be 30 to 99.99 wt%, 70 to 99.99 wt%, 50 to 99.99 wt%, or 90 to 99.99 wt%, with respect to a total content of the organic binder and the one-dimensional inorganic material, but is not limited thereto. In an exemplary embodiment, an adhesive force may be secured even in a case where an organic binder is not used, or a content of the organic binder is 1 wt% or less, and specifically, 0.01 wt% to 1 wt%, which is a small amount.

In addition, according to an exemplary embodiment, there is provided a method of producing a porous composite separator, the method including: (a) preparing a dispersion by separately or simultaneously adding a one-dimensional inorganic material and particles including inorganic particles to a solvent; and (b) coating the dispersion to the entire or partial surface of a porous substrate film and performing drying. The coating and drying in (b) may be performed two times or more.

In addition, according to an exemplary embodiment, there is provided a method of producing a porous composite separator, the method including: (a) preparing a dispersion by separately or simultaneously adding a one-dimensional inorganic material and particles including inorganic particles to a solvent; (b) coating the dispersion to the entire or partial surface of a porous substrate film and performing drying to form a multi-dimensional heterogeneous material-containing composite layer; and (c) coating a dispersion containing particles including inorganic particles and an organic binder to an upper surface of the composite layer and performing drying to form an inorganic particle layer or coating a dispersion containing particles including inorganic particles and a one-dimensional inorganic material to the upper surface of the composite layer and performing drying to form a second multi-dimensional heterogeneous material-containing composite layer.

A content of the one-dimensional inorganic material in the second composite layer in (c) is different from a content of the one-dimensional inorganic material in the composite layer formed in (b) (also referred to as a first composite layer).

In addition, the first composite layer and the second composite layer may further contain an organic binder.

In a case where the organic binder is contained, the content of the one-dimensional inorganic material may be 30 to 99.99 wt%, 50 to 99.99 wt%, 70 to 99.99 wt%, or 90 to 99.99 wt%, with respect to the total content of the organic binder and the one-dimensional inorganic material, but is not limited thereto.

The coating in (b) may be repeated two times or more, and in this case, the coating may be performed using dispersions having different contents of the one-dimensional inorganic materials.

In addition, according to an exemplary embodiment, there is provided an electrochemical device including the separator.

Hereinafter, the present disclosure will be described in detail.

According to an exemplary embodiment, there is provided a novel porous composite separator having an inorganic stacked structure that may simultaneously exhibit thermal stability, electrochemical stability, excellent lithium ion conductivity, prevention of contamination of an electrolyte solution, and an excellent rate of electrolyte solution impregnation.

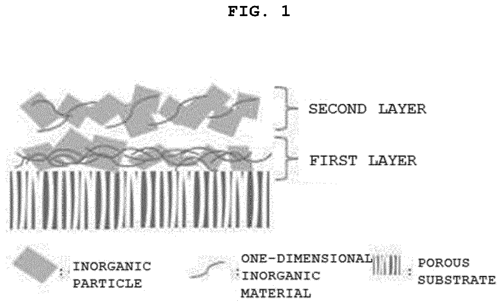

The separator according to an exemplary embodiment has a well-formed pore structure in the porous active layer as illustrated in FIGS. 1 to 3. Lithium ions may smoothly migrate through the pores, and a large amount of an electrolyte solution may be filled in the pores to implement a high rate of impregnation, thereby achieving improvement in performance of a battery.

In addition, unlike a separator including a ceramic layer obtained by stacking a polymer binder and inorganic particles on one or both surfaces of a porous substrate according to the related art, in the separator according to an exemplary embodiment, a layer stacked in contact with the porous substrate is stacked using inorganic particles and a one-dimensional inorganic material in the form of inorganic nanowires or inorganic nanofibers . Therefore, the electrochemical device using the separator according to an exemplary embodiment may achieve improvement of safety because the separator does not rupture inside the battery due to excessive conditions caused by internal or external factors such as high temperature, overcharging, and external impacts. In addition, it is possible to provide a novel separator that prevents a reduction in efficiency of the battery because it does not contain or contains a minimal organic binder that is eluted by an electrolyte solution or chemically reacts with the electrolyte solution.

As an example, the composite separator according to an exemplary embodiment may be a composite separator obtained by stacking a multi-dimensional heterogeneous material-containing composite layer formed by coating a slurry (dispersion) that contains inorganic particles or a one-dimensional inorganic material in the form of inorganic nanowires or inorganic nanofibers and contains substantially no organic binder to one or both surfaces of a porous substrate and performing drying, and stacking an inorganic particle layer formed by coating a slurry containing inorganic particles and an organic binder to an upper portion of the multi-dimensional heterogeneous material-containing composite layer and performing drying, as illustrated in FIG. 1.

The one-dimensional inorganic material in the form of inorganic nanowires or inorganic nanofibers in the multi-dimensional heterogeneous material-containing composite layer may play a role in maintaining or strengthening adhesive strength by firmly fixing the inorganic particles and the composite layer and the porous substrate.

In the multi-dimensional heterogeneous material-containing composite layer, a composition ratio of the inorganic particles to the one-dimensional inorganic material is not particularly limited, and may be 50 to 99.5 wt%:50 to 0.1 wt% or 90 to 99.5 wt%:10 to 0.1 wt%, but is not limited thereto.

In an exemplary embodiment, the one-dimensional inorganic material is not particularly limited as long as it is in the form of inorganic nanowires or inorganic nanofibers. The one-dimensional inorganic material may have, for example, a diameter of 1 to 100 nm, a length of 0.01 to 100 $\mu$m, and a length/diameter ratio (L/D) of 100 to 20,000, but is not limited thereto. In addition, when a specific surface area of the one-dimensional inorganic material is 50 to 4,000 m$^2$/g, it is more preferable because the role as a binder is sufficiently exhibited, but is not limited thereto. In addition, when the specific surface area is 300 m$^2$/g or more or 1,000 m$^2$/g or more, physical bonds such as van der Waals bonds are increased according to the surface area, and thus, entanglement between the one-dimensional inorganic materials, entanglement between the one-dimensional inorganic material and the porous substrate, and entanglement or physical bonds between the one-dimensional inorganic material and the particles are further increased, such that the adhesive force is further increased, which is preferable.

The one-dimensional inorganic material is not particularly limited as long as it is chemically stable under battery operation conditions, and may be, for example, a nanowire formed of one or two or more selected from a metal, carbon, a metal oxide, a metal nitride, a metal carbide, a metal carbonate, a metal hydrate, a metal carbonitride, a lithium-based inorganic material, a piezoelectric inorganic metal compound, and composite metal oxides of these metals. As a non-limiting example, the one-dimensional inorganic material may be one or two or more selected from boehmite, $Ga_2O_3$, SiC, $SiC_2$, quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, and $ZrO_2$.

In a case where the one-dimensional inorganic material is mixed with the inorganic particles, the mixture is coated to one or both surfaces of the porous substrate, and drying is performed, the inorganic particles are coated well to the surface of the porous substrate and are not peeled off even though an organic binder is not used. This seems to be because the inorganic particles are fixed by entanglement of the one-dimensional inorganic material and secondary bonds such as van der Waals bonds. In addition, it is considered that the adhesive strength is maintained and is excellent because the one-dimensional inorganic material penetrates into the pores of the porous substrate and is firmly anchored, and thus is firmly adhered to the porous substrate.

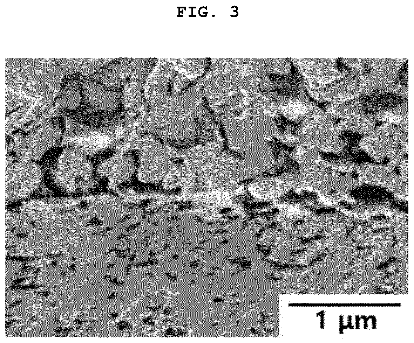

As illustrated in FIG. 3, it is confirmed that the inorganic particles are fixed by entanglement of the one-dimensional inorganic material in the form of inorganic nanowires. In addition, as shown in the cross section illustrated in FIG. 3, it is confirmed that the one-dimensional inorganic material serves as a binder for fixing the inorganic particles and fixing the porous substrate, for example, a polyethylene fabric and the porous active layer to each other.

Therefore, the composite separator according to an exemplary embodiment may prevent breakage or separation of the inorganic particles even when the layer stacked on the upper surface of the porous substrate is formed of only inorganic materials. In addition, a hydrophilic one-dimensional inorganic material of the porous active layer is present in the layer in contact with the porous substrate, wettability may be further improved, and an adhesive property between the porous substrate and the active layer may be further improved.

In addition, in an exemplary embodiment, in the multi-dimensional heterogeneous material-containing composite layer, an organic binder may be further used together with the one-dimensional inorganic material. In a case where an organic binder is used, a content ratio of the one-dimensional inorganic material to the organic binder may be 30 to 99.99 wt%:70 to 0.01 wt% or 70 to 99.8 wt%:30 to 0.2 wt% with respect to the total content of the two components, but is not limited thereto. The adhesive property is exhibited without an organic binder, and the adhesive force may be sufficiently exhibited even when a content of the organic binder is 1 wt% or less, and specifically is 0.1 to 1 wt%.

The particles are particles including inorganic particles, inorganic particles alone or mixed particles of inorganic particles and organic particles may be used, and it is more preferable to use inorganic particles alone because chemical stability is obtained and there is no chemical reaction with the electrolyte solution and no elution.

As an example, the inorganic particles may be formed of a mixture of one or two or more selected from boehmite, $Al_2O_3$, $TiO_2$, $CeO_2$, MgO, NiO, $Y_2O_3$, CaO, $SrTiO_3$, $SnO_2$, ZnO, $ZrO_2$, a lithium-based inorganic material, a piezoelectric inorganic metal compound, and composite metal oxides of these metals, but are not limited thereto. The inorganic particle is not limited as long as it does not significantly affect the performance of the battery due to electrochemical instability.

A size of the inorganic particle or the particle including an inorganic particle contained in the composite layer according to an exemplary embodiment is not limited, and may be, for example, 0.001 to 20 $\mu$m.

Next, the inorganic particle layer according to an exemplary embodiment will be described. The inorganic particle layer according to an exemplary embodiment is produced by containing inorganic particles and an organic binder, and a content ratio of the inorganic particles to the organic binder may be 50 to 99.99 wt%:50 to 0.01 wt%, 70 to 99.99 wt%:30 to 0.01 wt%, or 90 to 99.99 wt%:10 to 0.01 wt%.

The inorganic particles contained in the inorganic particle layer include inorganic particles alone or mixed particles of inorganic particles and organic particles, and it is more preferable that the inorganic particle layer is formed of only inorganic particles because chemical stability is obtained.

The inorganic particle is not particularly limited as long as it is an inorganic particle used in this field, and the inorganic particles may be formed of, for example, one or two or more selected from Cu, Ag, Au, Ti, Si, Al, $Al_2O_3$, $SiO_2$, AlOOH, ZnO, $TiO_2$, $HfO_2$, $Ga_2O_3$, SiC, $SiC_2$, Quartz, NiSi, Ag, Au, Cu, Al, Si, Ag-Ni, ZnS, $CeO_2$, MgO, NiO, $Y_2O_3$, CaO, $SrTiO_3$, $SnO_2$, boehmite, $ZrO_2$, a lithium-based inorganic material, a piezoelectric inorganic metal compound, and composite metal oxides of these metals, but are not limited thereto.

In addition, the inorganic particles may be formed of one or two or more selected from boehmite, $Al_2O_3$, $TiO_2$, $CeO_2$, MgO, NiO, $Y_2O_3$, CaO, $SrTiO_3$, $SnO_2$, ZnO, $ZrO_2$, a lithium-based inorganic material, a piezoelectric inorganic metal compound, and composite metal oxides of these metals.

The shapes of the particles are not particularly limited, and examples thereof include a spherical shape, a square shape, an elliptical shape, a random shape, and a mixture thereof.

A size of the particle is not particularly limited, and an average particle diameter of the particles may be, for example, 0.001 to 20 $\mu$m.

In an exemplary embodiment, as the organic binder, a water-soluble or organic solvent-soluble binder may be used, and specifically, a water-soluble binder may be used.

The organic binder is not particularly limited, and examples thereof include polyvinyl alcohol, polyvinyl acetate, an ethylene vinyl acetate copolymer, polyethylene oxide, cellulose acetate, cellulose acetate butyrate, cellulose acetate propionate, polyvinylidene fluoride-hexafluoropropylene, polyvinylidene fluoride-trichloroethylene, polymethyl methacrylate, polyacrylonitrile, polyvinylpyrrolidone, cyanoethyl pullulan, cyanoethyl polyvinyl alcohol, cyanoethyl cellulose, cyanoethyl sucrose, pullulan, carboxymethyl cellulose, an acrylonitrile styrene butadiene copolymer, polyimide, or a mixture thereof. In addition, the organic binder may be used without particular limitation as long as it is used as a binder for a separator of a secondary battery.

Next, the second composite layer according to an exemplary embodiment that is stacked on the upper portion of the multi-dimensional heterogeneous material-containing composite layer (the first composite layer) stacked on one or both surfaces of the porous substrate and contains the one-dimensional inorganic material with a content different that in the first composite layer will be described.

In an exemplary embodiment, in the second multi-dimensional heterogeneous material-containing composite layer, the content of the one-dimensional inorganic material may be higher or lower than or equal to the content of the one-dimensional inorganic material in the multi-dimensional heterogeneous material-containing composite layer (the first composite layer) formed in contact with the upper surface of the porous substrate.

In an exemplary embodiment, the first composite layer and the second composite layer may be formed to have the same thickness of different thicknesses.

The total thickness of the porous active layer including the first composite layer and the second composite layer may be 10% or more, 20% or more, 30% or more, 40% or more, or 50% or more of the entire thickness of the separator, but is not limited thereto.

Also, in the second composite layer according to an exemplary embodiment, secondary bonds such as van der Waals bonds between the inorganic particles may be formed by the one-dimensional inorganic material having the same high surface area and high length/diameter ratio as in the first composite layer. Entanglement between the porous substrate and the inorganic particles is generated, such that the inorganic particles are fixed and not separated by the entanglement. In addition, the one-dimensional inorganic material is anchored in the pores of the porous substrate to strengthen the adhesive force, such that the inorganic particles are not separated, and a bonding force between the porous substrate and the second composite layer is maintained or further increased.

That is, it is considered that the adhesive force is strengthened by the complex factor of the secondary chemical bonds and entanglement.

Since the one-dimensional inorganic material, the inorganic particles, and the organic binder are the same as those employed for the multi-dimensional heterogeneous material-containing composite layer stacked on one or both surfaces of the porous substrate, further descriptions will be omitted.

In an exemplary embodiment, in the second composite layer containing the particles including inorganic particles and the one-dimensional inorganic material, the inorganic particles are fixed by entanglement and secondary bonds such as van der Waals bonds of the one-dimensional inorganic material, and it is considered that the one-dimensional inorganic material of the second composite layer is entangled with the one-dimensional inorganic material of the first composite layer, and penetrates into and is anchored in the pores of the first composite layer, such that the second composite layer is firmly adhered to the first composite layer.

Therefore, the separator may prevent breakage or separation of the inorganic particles even when the entire porous active layer is formed of inorganic materials. In addition, the hydrophilic one-dimensional inorganic material is present in the layer in contact with the porous substrate, and inside and at an interface of the first composite layer and the second composite layer, such that wettability may be further improved and the adhesive property may be further improved.

In the related art, since inorganic particles and a polymer binder are used for a ceramic layer adjacent to the porous substrate, the porous structure is reduced due to the polymer binder, or non-uniformity of the pores is further increased, which causes non-smooth migration of lithium ions. Therefore, there is a limit to improving electrical characteristics of a battery. On the other hand, in an exemplary embodiment, the non-uniformity of the pores of the porous substrate is reduced as much as possible, such that the performance of the battery may be improved and the heat resistance may also be increased.

The layers stacked on the upper surface of the porous substrate may further contain commonly known other additives in addition to the inorganic particles and the one-dimensional inorganic materials, and if necessary, an organic binder.

In an exemplary embodiment, as the porous substrate, a porous polymer film formed of a polymer, a sheet, a non-woven fabric, a woven fabric, and the like used as separators may be variously used, and a porous substrate having a stacked structure in which the layers are stacked in two or more layers may also be used.

Non-limiting examples of a polyolefin-based porous film include porous films formed of low-density polyethylene, linear low-density polyethylene, high-density polyethylene, ultra-high molecular weight polyethylene, polypropylene, and copolymers thereof or derivatives thereof.

A thickness of the porous substrate is not particularly limited, and may be 1 to 100 $\mu$m, 5 to 60 $\mu$m, or 5 to 30 $\mu$m.

In addition, a pore size and a porosity of the porous substrate are not particularly limited, and the porosity may be 10 to 95%, and the pore size (diameter) may be 0.01 to 20 $\mu$m or 0.05 to 5 $\mu$m, but the present disclosure is not limited thereto.

A thickness of each of the composite layers and the inorganic particle layer in which a porous structure is formed by coating the dispersion to the porous substrate is not particularly limited, and may be 0.01 to 50 $\mu$m. In addition, a pore size and a porosity of each of the layers to be stacked are not particularly limited as long as they may be obtained by the size of the inorganic particle and the diameter of the one-dimensional inorganic material. For example, the pore size and the porosity may be 0.001 to 10 $\mu$m and 10 to 95%, respectively, but are not limited thereto.

A thickness of the composite separator is not particularly limited, and may be, for example, 1 to 100 $\mu$m or 1 to 30 $\mu$m.

Hereinafter, a method of producing a separator of an exemplary embodiment will be described.

In the related art, in a case where an organic polymer binder is not used, it is significantly difficult to disperse particles including inorganic particles. However, in an exemplary embodiment, it is appreciated that in a case where the inorganic particles and the one-dimensional inorganic material are mixed and dispersed, or in a case where the one-dimensional inorganic material is dispersed in a dispersion medium in advance, and the inorganic particles are added and dispersed, the particles, in particular, the inorganic particles are significantly easily dispersed.

That is, in the related art, in a case where an organic polymer binder is not used in an inorganic particle dispersion for coating the inorganic particles to the porous substrate, the inorganic particles are not dispersed with only the inorganic particles, and the adhesive force between the inorganic particles or between the inorganic particles and the substrate is not secured even when a dispersion is prepared by dispersing inorganic particles by applying an excessive energy and the dispersion is coated to the porous substrate.

However, in a case where the inorganic particles or the particles including inorganic particles and the hydrophilic one-dimensional inorganic material are mixed and dispersed, the inorganic particles are significantly well dispersed as in a case of using an organic polymer binder, and in a case where an active layer is formed using the dispersion, even when the active layer is formed entirely of only inorganic materials, an adhesive force to the substrate and an adhesive force between the particles are significantly excellent.

According to an exemplary embodiment, there is provided a method of producing a separator, the method including: coating a dispersion composition containing particles including inorganic particles and a one-dimensional inorganic material to one or both surfaces of a porous substrate; and drying the coated porous substrate to form a multi-dimensional heterogeneous material-containing composite layer.

In addition, according to an exemplary embodiment, there is provided a method of producing a porous composite separator, the method including: preparing a dispersion for dispersing a one-dimensional inorganic material to a solvent; preparing a dispersion composition by adding inorganic particles or particles including inorganic particles to the dispersion; and coating the dispersion composition to the entire or partial surface of a porous substrate film and performing drying to form a multi-dimensional heterogeneous material-containing composite layer.

The coating and coating and drying may be repeated two times or more.

In addition, according to an exemplary embodiment, there is provided a method of producing a porous composite separator, the method including: (a) preparing a dispersion composition (slurry composition) by separately or simultaneously adding a one-dimensional inorganic material and inorganic particles or particles including inorganic particles to a solvent; (b) coating the dispersion to the entire or partial surface of a porous substrate film and performing drying to form a multi-dimensional heterogeneous material-containing composite layer; and (c) coating a dispersion containing particles including inorganic particles and an organic binder to an upper surface of the composite layer and performing drying to form an inorganic particle layer or coating a dispersion containing particles including inorganic particles and a one-dimensional inorganic material to the upper surface of the composite layer and performing drying to form a second multi-dimensional heterogeneous material-containing composite layer.

A content of the one-dimensional inorganic material in the second composite layer in (c) is different from a content of the one-dimensional inorganic material in the composite layer formed in (b) (a first composite layer).

In a case where the content of the one-dimensional inorganic material in the second composite layer is higher than the content of the one-dimensional inorganic material in the first composite layer adjacent to the porous substrate, as seen in the results of Examples 1 and 2 and Examples 4 and 5, the adhesive forces of the composite separators in Examples 4 and 5 are increased by two times or more the adhesive forces of the composite separators in Examples 1 and 2, respectively, which shows that the adhesive strength is significantly increased.

In addition, in a case where the content of the one-dimensional inorganic material in the second composite layer is lower than that in the first composite layer adjacent to the porous substrate, a resistance deviation is small, and thus, a battery having uniform electrical characteristics is provided.

In addition, the dispersion composition for producing the first composite layer and the second composite layer may further contain an organic binder.

In addition, the dispersion composition may be prepared by dispersing a one-dimensional inorganic material to the solvent, and then adding and dispersing inorganic particles.

Water may be mainly used as the dispersion, and as other dispersion media, lower alcohols such as ethanol, methanol, and propanol, solvents such as dimethylformamide (DMF), acetone, tetrahydrofuran, diethyl ether, methylene chloride, N-methyl-2-pyrrolidone, hexane, and cyclohexane, and a mixture thereof may be used, but the present disclosure is not limited thereto.

An aggregate of the inorganic particles in the dispersion prepared by mixing inorganic particles or particles including inorganic particles and a one-dimensional inorganic material may be crushed using a ball mill, a beads mill, a planetary mixer (grinding and mixing method through rotation and revolution), or the like. In this case, a crushing time is preferably 0.01 to 20 hours, and a particle size of the crushed inorganic particle may be 0.001 to 10 $\mu$m as described above. A common method may be used as a crushing method, and in particular, the crushing may be performed by methods such as a ball mill, a beads mill, a planetary mixer, and a homogenizer.

The dispersion prepared by the above method is coated to the porous substrate and drying is performed, such that a porous composite separator having a stacked structure according to an exemplary embodiment may be obtained. Alternatively, the dispersion is coated onto a polyolefin-based porous film and drying is performed, such that a composite separator may be obtained.

The coating method is not particularly limited, and since the coating may be performed by various methods such as slot coating, knife coating, roll coating, die coating, and dip coating, further description will be omitted.

The separator produced as described above may be used as an electrochemical device, for example, a separator of a lithium secondary battery. The electrochemical device is not particularly limited, and examples thereof include a primary battery, a second battery, a fuel cell, and a capacitor.

In an exemplary embodiment, in a case where the separator is generally used in a battery, a general method of disposing and assembling an anode, a separator, and a cathode, and injecting an electrolyte solution is applied to complete manufacturing of a battery. Therefore, the manufacturing method will not be described in detail here.

In an exemplary embodiment, a cathode active material is not particularly limited as long as it is a general cathode active material, and examples thereof include lithiated magnesium oxide, lithiated cobalt oxide, lithiated nickel oxide, and a composite oxide obtained by a combination thereof.

An anode active material is not particularly limited as long as it is a general anode active material, and non-limiting examples thereof include carbon-based materials such as a lithium metal, activated carbon, and graphite, but are not particularly limited thereto.

The cathode active material and the anode active material are bonded to a cathode current collector and an anode current collector, respectively. An aluminum foil, a nickel foil, or the like may be used as the cathode current collector. The anode current collector is selected from copper, nickel, and the like, but is not limited thereto as long as it is generally used. Therefore, the present disclosure is not limited thereto.

The electrolyte solution to be used in an exemplary embodiment is also not limited as long as it is used in this field. Therefore, the electrolyte solution will not be further described.

Hereinafter, Examples are provided to assist in understanding the present disclosure, but each of the following Examples is merely an example, and the scope of the present disclosure is not limited to the following Examples.

**Evaluation of Physical Properties**

1. Evaluation of Peeling Force

A peeling strength between a porous substrate and a porous active layer was measured by a 180° test method (ASTM D903) using a tensile tester (3343) manufactured by Instron Corporation.

2. Evaluation of Thermal Shrinkage Rate

A 10 cm (length) x 10 cm (width) separator was left at each of 150°C, 160°C, and 170°C, for 1 hour, a reduction rate in area was measured, and a thermal shrinkage rate was determined. The thermal shrinkage rate was evaluated by calculation according to the following Equation 1.

```
[Equation 1]
```

$$\text{Thermal shrinkage rate (\%)} = ((\text{Length before heating} - \text{Length after heating})/\text{Length before heating}) \times 100$$

3. Gurley Permeability

A gas permeability was measured by a Gurley permeability. The Gurley permeability was measured using a densometer manufactured by Toyo Seiki Seisaku-sho, Ltd. according to the ASTM D726 standard. The times taken for 100 cc of air to pass through an area of 1 square inch of the separator were recorded in seconds and compared with each other. The Gurley permeability was calculated according to Equation 2. The results of the Gurley permeability are shown in Table 1.

```
[Equation 2]
```

$$\Delta\text{Gurley permeability (sec)} = \text{Gas permeability of separator in which porous active layer is formed} - \text{Gas permeability of porous substrate}$$

4. Measurement of Electrochemical Characteristics of Battery

An impedance of each of the batteries manufactured through each assembling process was measured using a charge/discharge cycle device by the following method. The results thereof are shown in Table 1.

While maintaining a temperature of a chamber at room temperature (25°C) using a device, the battery was charged at a constant current-constant voltage (CC-CV) of 4.2 V and then was discharged to 2.5 V by a method of measuring a lifespan and resistance at room temperature. The charging and discharging were measured by performing 0.5 C charging and 0.5 C discharging from 4.2 V to 2.5 V 20 times. An average value of DC-IR impedance values of each cycle during the charging and discharging process was measured. A resistance increase rate was calculated according to Equation 3. The results of the resistance increase rate are shown in Table 1.

[Equation 3]

Resistance increase rate (%) = ((Resistance of separator including coating layer – Resistance of PE film)/Resistance of PE film) x 100

**[Example 1]**

1) Production of Composite Separator

97 wt% of boehmite particles having an average particle diameter of 400 nm and 3 wt% of boehmite nanowires having an average diameter of 5 nm and a length of 1.5 $\mu$m were added to water to prepare a dispersion composition (1) having a solid content of 15 wt%.

92 wt% of boehmite particles having an average particle diameter of 400 nm and 8 wt% of boehmite nanowires having an average diameter of 5 nm and a length of 1.5 $\mu$m were added to water to prepare a dispersion composition (2) having a solid content of 15 wt%.

The prepared dispersion composition (2) was coated to both surfaces of a polyethylene film having a thickness of 9 $\mu$m (porosity of 41%) to a thickness of 0.5 $\mu$m using a slot die, the dispersion composition (1) was coated to both the surfaces of the polyethylene film to a thickness of 1 $\mu$m using the slot die, and drying was performed, thereby forming an composite layer formed on each of both surfaces and having a thickness of 1.5 $\mu$m (see FIG. 1).

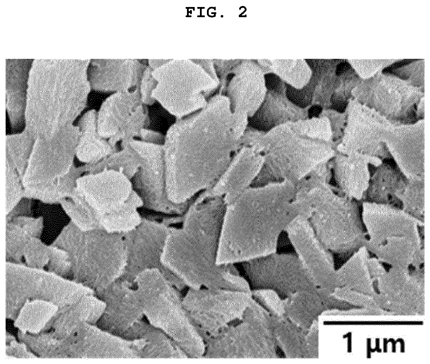

The SEM photographs of the surfaces and cross sections thereof are as illustrated in FIGS. 2 and 3. It is confirmed that the inorganic particles are fixed by the inorganic nanowires as illustrated in FIG. 2, and the particles are fixed by the entanglement of the inorganic nanowires, the particles are firmly adhered to the surface of the polyethylene film, and the pores are formed well as illustrated in FIG. 3.

The results of analysis of the thermal shrinkage rate, the increase in Gurley permeability, the peeling force, the resistance, and the resistance increase rate obtained using the separator are shown in Table 1.

2) Manufacturing of Lithium Secondary Battery

**<Production of Cathode>**

94 wt% of LiCoO$_2$ as a cathode active material, 2.5 wt% of polyvinylidene fluoride as an adhesive, and 3.5 wt% of carbon black as a conductive agent were added to N-methyl-2-pyrrolidone (NMP), which was a solvent, and stirring was performed to prepare a uniform cathode slurry. The slurry was coated onto an aluminum foil having a thickness of 30 $\mu$m, drying was performed at a temperature of 120°C, and compression was performed, thereby producing a cathode plate having a thickness of 150 $\mu$m.

**<Production of Anode>**

95 wt% of artificial graphite as an anode active material, 3 wt% of acrylic latex (trade name: BM900B, solid content: 20 wt%) having a T$_g$ of -52°C as an adhesive, and 2 wt% of carboxymethyl cellulose (CMC) as a thickener were added to water, which was a solvent, and stirring was performed to prepare a uniform anode slurry. The slurry was coated onto a copper foil having a thickness of 20 $\mu$m, drying was performed at a temperature of 120°C, and compression was performed, thereby producing an anode plate having a thickness of 150 $\mu$m.

**<Manufacturing of Battery>**

A pouch type battery was assembled using the produced cathode and anode and the composite separator produced in Example 1 in a stacking manner. An electrolyte solution in which 1 M lithium hexafluorophosphate (LiPF$_6$) was dissolved and ethylene carbonate (EC), ethyl methyl carbonate (EMC), and dimethyl carbonate (DMC) were added in a volume ratio of 3:5:2 was injected into each of the assembled batteries to manufacture a lithium secondary battery.

Therefore, a pouch type lithium ion secondary battery having a capacity of 80 mAh was manufactured. The evaluation results of the lithium secondary battery are shown in Table 1.

[Example 2]

93 wt% of boehmite particles having an average particle diameter of 400 nm, 3 wt% of boehmite nanowires having an average diameter of 5 nm and a length of 1.5 $\mu$m, and 4 wt% of polyvinyl alcohol as an organic binder were added to water to prepare a dispersion composition (3) having a solid content of 15 wt%.

88 wt% of boehmite particles having an average particle diameter of 400 nm, 8 wt% of boehmite nanowires having an average diameter of 5 nm and a length of 1.5 $\mu$m, and 4 wt% of polyvinyl alcohol as an organic binder were added to water to prepare a dispersion composition (4) having a solid content of 15 wt%.

The prepared dispersion composition (4) was coated to both surfaces of a polyethylene film having a thickness of 9 $\mu$m (porosity of 41%) to a thickness of 0.5 $\mu$m using a slot die, the dispersion composition (3) was coated to both the surfaces of the polyethylene film to a thickness of 1 $\mu$m using the slot die, and drying was performed, thereby forming an composite layer formed on each of both surfaces and having a thickness of 1.5 $\mu$m.

A battery was manufactured in the same manner as that of Example 1 using the characteristics of the produced composite separator and the composite separator. The results of measuring electrical characteristics are shown in Table 1.

[Example 3]

96 wt% of boehmite particles having an average particle diameter of 400 nm and 4 wt% of polyvinyl alcohol as an organic binder were added to water to prepare a dispersion composition (5) having a solid content of 15 wt%.

The dispersion composition (2) of Example 1 was coated to both surfaces of a polyethylene film having a thickness of 9 $\mu$m (porosity of 41%) to a thickness of 0.5 $\mu$m using a slot die, the prepared dispersion composition (5) was coated to both the surfaces of the polyethylene film to a thickness of 1 $\mu$m using the slot die, and drying was performed, thereby forming an composite layer formed on each of both surfaces and having a thickness of 1.5 $\mu$m.

A battery was manufactured in the same manner as that of Example 1 using the characteristics of the produced composite separator and the composite separator. The results of measuring electrical characteristics are shown in Table 1.

[Example 4]

Example 4 was performed in the same manner as that of Example 1, except that in the coating step, the dispersion composition (1) was coated first, the dispersion composition (2) was coated, and then, drying was performed. The results are shown in Table 1.

[Example 5]

Example 5 was performed in the same manner as that of Example 2, except that the dispersion composition (3) was coated, and then, the dispersion composition (4) was coated. The results are shown in Table 1.

[Example 6]

Example 6 was performed in the same manner as that of Example 1, except that the dispersion composition (4) was coated two times, and the dispersion composition (3) was not coated. The results are shown in Table 1.

[Comparative Example 1]

The dispersion composition (5) produced in Example 3 was coated to both surfaces of a polyethylene film having a thickness of 9 $\mu$m (porosity of 41%) to a thickness of 1.5 $\mu$m using a slot die, and drying was performed.

In addition, a battery was manufactured in the same manner as that of Example 1 using the characteristics of the produced composite separator and the composite separator. The results of measuring electrical characteristics are shown in Table 1.

[Table 1]

| | Thickness of active layer | Physical properties of composite separator | | | | | | Physical properties of battery | | |
| | | Thermal shrinkage rate (%) | | | | | Peeling force (gf/ 25 mm) | Resistance (mΩ) | | Resistance increase rate |
| | $\mu$m | 120°C | 130°C | 150°C | 160°C | 170°C | 25°C | Average | Standard deviation | % |
|---|---|---|---|---|---|---|---|---|---|---|
| Example 1 | 3 | 0.1 | 0.5 | 1.3 | 1.3 | 1.4 | 48 | 1287 | 18 | -3.16 |
| Example 2 | 3 | 0.2 | 0.6 | 1.2 | 1.1 | 1.2 | 67 | 1290 | 19 | -2.93 |
| Example 3 | 3 | 0.3 | 0.8 | 2.2 | 2.4 | 2.5 | 49 | 1295 | 20 | -2.56 |
| Example 4 | 3 | 0.2 | 0.9 | 1.5 | 1.6 | 1.6 | 98 | 1328 | 11 | -0.1 |
| Example 5 | 3 | 0.1 | 0.6 | 1.0 | 1.1 | 1.1 | 124 | 1328 | 12 | -0.1 |
| Example 6 | 3 | 0.2 | 0.9 | 1.7 | 1.9 | 2.1 | 132 | 1298 | 18 | -0.5 |
| Comparative Example 1 | 3 | 0.4 | 4.2 | 45.2 | 52 | 65 | 29 | 1329 | 24 | 0 |

As shown in Table 1, in all Examples, the thermal shrinkage rate was significantly increased in comparison to Comparative Example 1 in which the inorganic particle layer was included, and in particular, the thermal shrinkage rate was 2% or less even at the temperature of 170°C or higher.

In addition, when the battery was manufactured using the composite separator, the resistance increase rate was rather reduced, the adhesive strength was about two times or more the adhesive strength in the Comparative Example 1 in which inorganic particle layer was included in terms of the peeling force, and in particular, in Examples 2 and 5 in which the organic binder and the one-dimensional inorganic material were used together, the peeling force was significantly increased in comparison to Examples 1 and 4 in which the one-dimensional inorganic material was used alone.

In addition, in Examples 1 and 4 in which the one-dimensional inorganic material was used alone, it was confirmed that the peeling force was maintained without deterioration of the adhesive force even at a high temperature.

In addition, it was appreciated that the resistance of the battery was low, the standard deviation was low, and the resistance increase rate was low. This is considered to be because the inorganic binder has excellent wettability with electrolyte solution than the organic binder and is electrochemically stable in the electrolyte solution.

As described above, it is appreciated that the separator of the present disclosure includes the multi-dimensional heterogeneous material-containing composite layer that is formed on the polyolefin-based separator substrate having pores and contains inorganic particles and a one-dimensional inorganic material, such that the adhesive property, the thermal shrinking property, and the battery charging and discharging characteristics are excellent even when an organic polymer binder is not used.

Therefore, when the stacked structure in which the heat-resistant porous structure having a micro unit is formed is introduced, all of the thermal and electrochemical stability and the performance of the battery may be significantly improved.

## Claims

1. A composite separator comprising:

   a porous substrate (a); and
   a multi-dimensional heterogeneous material-containing composite layer (b) that is stacked on one or both surfaces of the porous substrate and contains inorganic particles or particles including inorganic particles (A) and a one-dimensional inorganic material (B).

2. The composite separator of claim 1, further comprising
   an inorganic particle layer that is formed on an upper surface of the multi-dimensional heterogeneous material-containing composite layer and contains an organic binder and particles including inorganic particles.

3. The composite separator of claim 1, further comprising
   a second multi-dimensional heterogeneous material-containing composite layer formed on the multi-dimensional heterogeneous material-containing composite layer.

4. The composite separator of claim 3,
   wherein the second composite layer contains a one-dimensional inorganic material with a content different from a content of the one-dimensional inorganic material in the composite layer stacked on the one or both surfaces of the porous substrate.

5. The composite separator of claim 4,
   wherein the content of the one-dimensional inorganic material in the second composite layer is higher than the content of the one-dimensional inorganic material in the composite layer stacked on the one or both surfaces of the porous substrate.

6. The composite separator of claim 4,
   wherein the content of the one-dimensional inorganic material in the second composite layer is lower than the content of the one-dimensional inorganic material in the composite layer stacked on the one or both surfaces of the porous substrate.

7. The composite separator of claim 1,
   wherein the inorganic particles comprise one or two or more selected from a metal oxide, a metal nitride, a metal carbide, a metal carbonate, a metal hydrate, and a metal carbonitride.

8. The composite separator of claim 1,
wherein in the multi-dimensional heterogeneous material-containing composite layer in contact with the porous substrate, a content of the one-dimensional inorganic material is 0.1 to 50 wt%, and a content of the inorganic particles or the particles including inorganic particles is 50 to 99.9 wt%.

9. The composite separator of claim 1,
wherein the composite layer further contains an organic binder.

10. The composite separator of claim 3,
wherein the second composite layer further contains an organic binder.

11. The composite separator of claim 9,
wherein in the composite layer, a content of the one-dimensional inorganic material is 30 to 99.99 wt% with respect to 100 wt% of a total content of the one-dimensional inorganic material and the organic binder.

12. The composite separator of claim 10,
wherein in the second composite layer, a content of the one-dimensional inorganic material is 30 to 99.99 wt% with respect to 100 wt% of a total content of the one-dimensional inorganic material and the organic binder.

13. The composite separator of claim 1,
wherein the one-dimensional inorganic material is a nanowire or a nanofiber formed of one or two or more selected from a metal, carbon, a metal oxide, a metal nitride, a metal carbide, a metal carbonate, a metal hydrate, and a metal carbonitride.

14. The composite separator of claim 1,
wherein the porous substrate is formed of one or more selected from the group consisting of high-density polyethylene, low-density polyethylene, linear low-density polyethylene, ultra-high molecular weight polyethylene, polypropylene, and copolymers thereof.

15. An electrochemical device comprising a cathode, an anode, the composite separator any one of claims 1 to 14, and an electrolyte solution.

**FIG. 1**

SECOND LAYER

FIRST LAYER

INORGANIC PARTICLE

ONE-DIMENSIONAL INORGANIC MATERIAL

POROUS SUBSTRATE

FIG. 2

FIG. 3

# EUROPEAN SEARCH REPORT

**Application Number**

EP 22 16 2586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2013 037854 A (UNIV SHINSHU; TOPTEC CO LTD) 21 February 2013 (2013-02-21) * abstract and figures 5(a) and (b) * ----- | 1-15 | INV. H01M50/446 H01M50/449 H01M50/451 H01M50/457 |

TECHNICAL FIELDS SEARCHED (IPC)

H01M

The present search report has been drawn up for all claims

| Place of search | Date of completion of the search | Examiner |
|---|---|---|
| Munich | 2 August 2022 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 16 2586**

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2022

| Patent document cited in search report | | Publication date | Patent family member(s) | | Publication date |
|---|---|---|---|---|---|
| JP 2013037854 | A | 21-02-2013 | JP | 2013037854 A | 21-02-2013 |
| | | | KR | 101213567 B1 | 18-12-2012 |

EPO FORM P0459